Europäisches Patentamt

European Patent Office

Office européen des brevets

(11) Veröffentlichungsnummer: **0 215 449 B1**

(12) **EUROPÄISCHE PATENTSCHRIFT**

(45) Veröffentlichungstag der Patentschrift: 22.05.91

(51) Int. Cl.⁵: **B21D 39/03**

(21) Anmeldenummer: 86112615.9

(22) Anmeldetag: 12.09.86

(54) Verfahren und Vorrichtung zum Verbinden dünner Platten.

(30) Priorität: 14.09.85 DE 3532900
19.04.86 DE 3613324

(43) Veröffentlichungstag der Anmeldung:
25.03.87 Patentblatt 87/13

(45) Bekanntmachung des Hinweises auf die
Patenterteilung:
22.05.91 Patentblatt 91/21

(84) Benannte Vertragsstaaten:
AT BE CH DE FR GB IT LI LU NL SE

(56) Entgegenhaltungen:
EP-A- 0 077 932      DE-A- 1 452 782
DE-A- 3 210 208      GB-A- 1 019 677
US-A- 3 579 809      US-A- 3 771 216

PATENTS ABSTRACTS OF JAPAN, Band 7,
Nr. 47 (M-196)[1192], 24. Februar 1983; & JP-
A-57 195 542 (TOKYO SHIBAURA DENKI K.K.)
01-12-1982

(73) Patentinhaber: RAPP, Eugen
Max-Regerstrasse 4
W-7981 Berg(DE)

(72) Erfinder: RAPP, Eugen
Max-Regerstrasse 4
W-7981 Berg(DE)

(74) Vertreter: Schuster, Gregor, Dipl.-Ing.
Patentanwälte Schuster & Thul Wiederholdstrasse 10
W-7000 Stuttgart 1(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem Verfahren und von einer Vorrichtung zum Verbinden aufeinanderliegender dünner Platten nach der Gattung des Hauptanspruchs und der Gattung des Anspruchs 3.

Ein solches Verfahren sowie eine derartige Vorrichtung ist durch die US-A- 3 579 809 bekannt. Das nach dem Tiefziehvorgang durch den Quetschvorgang der tiefgezogenen Flächenteile quer zur Pressrichtung verdrängte Material bewirkt bei der dort vorgesehenen, einen Rechteckquerschnitt aufweisenden Tiefziehöffnung eine Verschiebung von zwei gegenüberliegenden Seitenwänden der Tiefziehöffnung, um dadurch dieses in Querrichtung fließende überschüssige Material aufnehmen zu können. Teilweise dringt dieses Material auch in einen sich beim Verschieben der Seitenwände ergebende Spalte zwischen dem den Matrizenboden darstellenden Anker und den die Seitenwände bildenden Verschiebeteile. Dieser Materialfluß, der vor allem das unten liegende Flächenteil betrifft, ermöglicht dem oberen Flächenteil ebenfalls in Querrichtung zu fließen, um danach die unten liegende Platte zu hintergreifen, d.h. Abmessungen zu erhalten, die über die Innenabmessungen der engsten Stelle des Tiefziehloches der unteren Platte hinausgehen. Hierbei wurde davon ausgegangen, daß diese erforderliche Hintergreifung nur durch ein solches Verschieben der Seitenwände ermöglicht wird, so daß an den beiden nicht verschobenen Seitenwänden eine entsprechende Hintergreifung nicht erwartet wird und auch nicht stattfinden kann, da durch das Nachgeben der anderen beiden Seitenwände des Materialabfluß bereits stattfindet.

Durch dieses bekannte Verbindungsverfahren wird somit nur an zwei der vier Seiten eine Hintergreifung bewirkt. Außerdem ist die dazu verwendete Vorrichtung aufwendig, wobei der Quetschfluß durch elastische Mittel kontrolliert wird, deren Elastizität naturgemäß bei längerem Betrieb ermüdet, was zu entsprechenden Veränderungen beim Materialfluß der gequetschten Flächenteile führen kann. Außerdem kann es zum Festklemmen der Verbindungswarze an der Matrize kommen.

Das erfindungsgemäße Verfahren sowie die erfindungsgemäße Vorrichtung mit den Merkmalen des Hauptanspruchs bzw. den Merkmalen des Anspruchs 3 hat demgegenüber den Vorteil, daß mit einem sehr einfachen Matrizenwerkzeug und, wie bei den bekannten Verfahren, mit nur einem einzigen Arbeitsgang eine äußerst feste Verbindung zwischen den Platten entsteht, wobei zudem die Verbindungswarze nur verhältnismäßig gering über die Plattenfläche herausragt. Außerdem ist weder ein Verklemmen noch ein Ermüden des Werkzeuges möglich, oder gar eine Fertigungsbeeinträchtigung durch Verschmutzung des Werkzeuges. Durch die Unnachgiebigkeit der Tiefziehöffnung in Längs- sowie Querrichtung erfolgt während des Quetschvorgangs ein intensiver Materialfluß, der nicht nur ein Hintergreifen der unten liegenden Platte durch den tiefgezogenen und gequetschten Flächenteil der oberen Platte bewirkt, sondern der zudem die verformten Flächenteile im Außenbereich starkt ineinanderfließen läßt.

Nach einer vorteilhaften Ausgestaltung der Erfindung weist der Formstempel in Tiefziehrichtung einen stufenförmigen Schnitt auf, mit einem Trägerteil größerer Abmessung und einen Tiefziehabschnitt kleinerer Abmessung, wodurch eine Schulter gebildet, die nach Beendigung des Quetschvorgangs auf den Platten aufliegt. Hierdurch wird vor allem erreicht, daß während des Quetschvorgangs verhindert wird, daß wegfließendes Material in Richtung zum Formstempel hin abfließen kann.

Nach einer weiteren vorteilhaften Ausgestaltung der Erfindung ist im Randbereich des Bodens der Sacköffnung eine umlaufende Sicke vorhanden, die einen sich nach oben erweiternden Keilquerschnitt aufweist. Mittels dieser Sicke wird ein besseres Ineinanderfließen des gequetschten Materials im Randbereich der Verbindungswarze erzielt.

Die Erfindung kann sowohl bei dünnen Metallplatten, als auch bei sonstigen verformbaren Materialien Anwendung finden, oder aber auch zwischen Metallplatten und nichtmetallischen Platten.

Weitere Vorteile und vorteilhafte Ausgestaltungen der Erfindung sind der nachfolgenden Beschreibung, der Zeichnung und den Ansprüchen entnehmbar.

Zwei Ausführungsbeispiele des Gegenstandes der Erfindung sind in der Zeichnung dargestellt und werden im folgenden näher beschrieben. Es zeigen:

Fig. 1    das erste Ausführungsbeispiel als Werkzeug im Längsschnitt vor der Bearbeitung, aber mit eingelegten Blechen;

Fig. 2    eine Werkzeugstellung nach Beendigung des Tiefziehvorgangs,

Fig. 3    eine Werkzeugstellung nach Beendigung des Quetschvorgangs und

Fig. 4    das zweite Ausführungsbeispiel als Werkzeug im Längsschnitt entsprechend der in Fig. 3 gezeigten Werkzeugstellung.

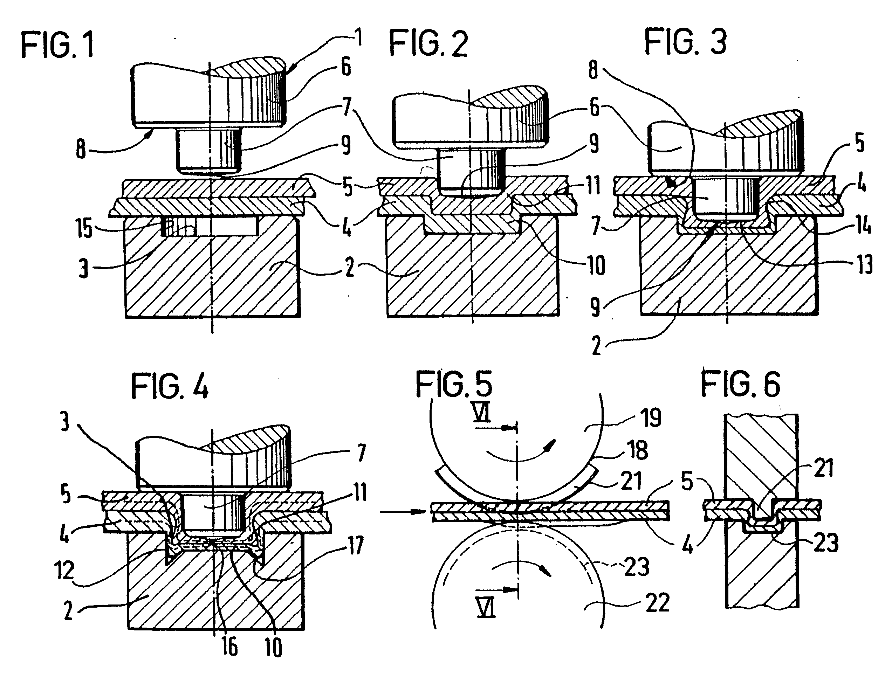

In den Fig. 1 - 4 ist vom ersten Werkzeugbeispiel nur das eigentliche Herstellungswerkzeug in drei verschiedenen Arbeitsstellungen dargestellt. Natürlich gehört zur Vollständigkeit der Erfindung auch die Preßvorrichtung, die in unterschiedlichster Weise gestaltet sein kann und durch die für das Durchführen der erfindungsgemäßen Verbindung ein Stempel 1 in Richtung eines Gesenks 2 hin und her bewegbar sein muß. Das Gesenk 2 ist ortsfest in die nichtdargestellte Preßvorrichtung eingesetzt und weist eine zylindrische flache Sackbohrung 3 kreisförmigen Querschnitts auf. Auf dieses somit als Matrize ausgebildete Gesenk 2 wird eine untere Platte 4 und eine obere Platte 5 gelegt, die miteinander verbunden werden sollen. Bei diesen Platten 4 und 5 handelt es sich bei diesem Ausführungsbeispiel um Bleche. Der Formstempel 1 weist einen Trägerschaft 6 und einen achsgleich angeordneten Arbeitszapfen 7 kleineren Durchmessers auf, wodurch sich eine Schulter 8 ergibt.

In Fig. 2 ist der erste Teil des Arbeitsvorgangs, nämlich das Tiefziehen beendet, bei dem der Arbeitszapfen 7 den seiner freien Stirnfläche 9 vorgelagerten Flächenteil der beiden Bleche 4 und 5 in die Sacköffnung gezogen hat. An den gestreckten Verbindungen 10 und 11 zwischen den in der ursprünglichen Lage verbliebenen Blechen und den tiefgezogenen Flächenteilen entstehen Verdünnungen des Materials, wobei jedoch die topfförmigen Ausformungen noch kein Ineinanderverhaken der Bleche 4 und 5 bewirken.

In Fig. 3 ist der Formstempel 1 in seiner Endlage, nämlich nach dem Quetschen der tiefgezogenen Flächenteile, dargestellt. In dieser Stellung liegt die Schulter 8 an der Oberfläche des Bleches 5 an. Die der Stirnfläche 9 gegenüberliegenden Flächenteile sind dabei stark zusammengepreßt, wobei das Material radial nach außen gequetscht wurde. Die Sackbohrung 3 ist restlos ausgefüllt, und es ist gleichzeitig eine materialverfestigende Verdichtung des verformten Materials erfolgt. Aufgrund der Quetschwirkung wurde der obere Flächenteil 13 so weit radial ausgedehnt, daß er hinter die Tiefziehöffnung 14 des unteren Bleches 4 greift. Aufgrund der hohen Verformungskräfte ist zudem eine formschlüssige äußerst feste Verbindung durch Ineinanderfließen des Materials erzielt. Um Kerbwirkungen, die möglicherweise ein Abreißen des oberen Flächenstückes 13 von der Platte 5 bewirken könnten,zu unterbinden, ist die Stirnseite 9 des Arbeitszapfens 7 korbförmig ausgebildet. Zwischen den beiden Blechen 4 und 5 ergeben sich ohnehin beim Tiefziehen automatisch leicht abgerundete Berührungsflächen.

Zum Auswerfen des Werkstückes braucht nun lediglich der Formstempel nach oben gezogen zu werden, wonach der eingeformte Nocken leicht aus der Sackbohrung 3 gehoben werden kann, welche in Bewegungsrichtung verlaufende glatte Begrenzungswände 15 aufweist.

Bei der in Fig. 4 dargestellten Variante des Werkzeugs, dessen Arbeitsstellung der in Fig. 3 entspricht, ist im Randbereich des Bodens 16 der Sacköffnung 3 eine umlaufende Sicke 17 keilförmigen Querschnitts vorhanden, in die ebenfalls das vom Arbeitszapfen 7 verdrängte Material gequetscht wird, so daß bei 12 ein stärkeres Ineinanderfließen des Materials stattfindet. Da mehr überschüssiges Material der zu verclinschenden Teile abgelagert werden kann und dadurch mehr Platz für das Ineinanderfließen entsteht, ergibt sich eine festere Verbindung als bei der ersten Variante.

In gleicher Weise können statt zwei beispielhaft gezeigten Blechen auch eine größere Anzahl übereinanderliegender dünner Platten miteinander verbunden werden. Der sich bei vier Platten etwa ergebende Verlauf der Berührungsflächen, ist in Fig. 4 durch zwei gestrichelte Linien angedeutet. Wichtig ist, daß beim Formstempel und bei der Sacköffnung des Gesenkes die einander zugewandten Wandflächen parallel und in Tiefziehrichtung verlaufen, um so ein leichtes Lösen der miteinander verbundenen Platten aus dem Werkzeug zu ermöglichen. Der Querschnitt des Stempels und der entsprechenden Sacköffnung kann oval, vieleckig oder sonst wie gestaltet sein. Es ist auch denkbar, daß die Sacköffnung als Nut ausgebildet ist, in die entweder auf die Nutlänge oder auch in einzelnen Abschnitten durch entsprechend gestaltete Formstempel eine Verbindungsstrecke oder Verbindungspunkte hergestellt werden, wobei die eigentlichen Quetschverbindungen zwischen den Seitenwänden der Nut und den, diesen Wänden zugewandten Formstempelwänden entstehen.

Bei dem in Fig. 5 und 6 gezeigten zweiten Ausführungsbeispiel wird diese Clinchverbindung über zwei Rollen bewirkt, zwischen denen die Platten 4 und 5 hindurch gezogen werden, wobei auf der Lauffläche 18 der oberen Rolle 19 eine als Formstempel dienende Leiste 21 angeordnet ist, während auf der unteren Rolle 22 eine Nut 23 vorhanden ist, die als Sacköffnung dient. Der in Tiefziehen und Quetschen aufgeteilte Fertigungsvorgang wird hier beim Durchziehen der Platten 4 und 5 zwischen den Rollen 19 und 22 als weicher Übergang erzielt, in dem nach vor dem engsten Durchgang der Tiefziehvorgang erfolgt und dann im engsten Durchgang der Quetschvorgang beendet ist. Hierdurch ist es möglich auch längere Nähte zu erzeugen, die, sofern gewünscht, sogar eine Biegesteifigkeit der Platten mit sich bringen.

Es ist auch erfindungsgemäß nur eine Rolle zu verwenden an der die Formstempel vorhanden sind und die mit einer ebenen Gesenkfläche zusammenwirkt, in der die Sacköffnungen angeordnet sind. Bei einer solchen Vorrichtung wären die Platten 4 und 5 in Ruhe, während die Rolle über den Platten abrollen würde.

Alle in der Beschreibung, den nachfolgenden Ansprüchen und der Zeichnung dargestellten Merkmale können sowohl einzeln als auch in beliebiger Kombination miteinander erfindungswesentlich sein.

**Ansprüche**

1.  Verfahren zum Verbinden aufeinanderliegender dünner Platten (4, 5) oder Plattenabschnitte, bei dem übereinanderliegende Flächenteile der Platten (4, 5) miteinander in eine Tiefziehöffnung (3) tiefgezogen werden und die tiefgezogenen Flächenteile (13) unter Begrenzung der Ausdehnung in zwei einander abgewandten Querrichtungen und in Tiefziehrichtung breitgequetscht werden, wobei zur formschlüssigen Verhakung der Platten (4, 5) der tiefgezogene und gequetschte Flächenteil (13) einer ersten Platte (5) in Tiefziehrichtung gesehen - die unter der ersten Platte (5) liegende zweite Platte (4) hintergreift, wobei dieses Flächenteil (13) Abmessungen aufweist, die über die Innenabmessungen der engsten Stelle des Tiefziehloches (14) der zweiten Platte (4) hinausgehen, wobei unter plastischer Verformung des Plattenmaterials eine Fügeverbindungsstelle mit einer in Tiefziehrichtung verlaufenden Randfläche entsteht, dadurch gekennzeichnet, daß das Volumen der Tiefziehöffnung (3) in und quer zur Preßrichtung unveränderbar ist, so daß während des Quetschvorgangs die Längs- sowie Querausdehnung der tiefgezogenen Flächenteile (13) unnachgiebig begrenzt wird.

2.  Verfahren nach Anspruch 1, dadurch gekennzeichnet, daß nach dem Quetschvorgang die Oberfläche des Bodenbereichs der Flächenteile (13) außerhalb der Plattenebene liegt, die durch die Unterseite der aufeinanderliegenden Platten (4, 5) gebildet wird.

3.  Vorrichtung zur Durchführung des Verfahrens nach Anspruch 1 oder 2 zum nietartigen Verbinden aufeinanderliegender Platten (4, 5) oder Plattenabschnitte, mit einem an einer Pressenvorrichtung angeordneten, eine Tiefziehöffnung (3) aufweisenden Gesenk (2) und mit einem in Richtung Gesenk (2) quer zu den zu verbindenden Platten (4, 5) oder Plattenabschnitten angetriebenen Formstempel (1), wobei die Seitenwände (15) der Tiefziehöffnung (3) einen radialen Abstand zu den Mantelflächen des Formstempels aufweisen, dadurch gekennzeichnet, daß die Tiefziehöffnung (3) im Gesenk (2) in radialer und axialer Richtung als Sacköffnung (3) (Matrize) ausgebildet ist, deren Seitenwände (15) in Bewegungsrichtung des Formstempels (1) verlaufen und wie der Boden der Sacköffnung (3) unnachgiebig sind.

4.  Vorrichtung nach Anspruch 3, dadurch gekennzeichnet, daß der Formstempel (21) leistenförmig ausgebildet ist.

5.  Vorrichtung nach einem der Ansprüche 3 oder 4, dadurch gekennzeichnet, daß die Sacköffnung (23) als Längsnut ausgebildet ist.

6.  Vorrichtung nach einem der Ansprüche 3 bis 5, dadurch gekennzeichnet, daß der Formstempel (1) in Tiefziehrichtung einen stufenförmigen Schnitt aufweist, mit einem Trägerteil (6) größerer Abmessung und einem Tiefziehabschnitt (7) kleinerer Abmessung, wodurch eine Schulter (8) gebildet wird, die nach Beendigung des Quetschvorgangs auf den Platten (4, 5) aufliegt.

7.  Vorrichtung nach einem der Ansprüche 3 bis 7, dadurch gekennzeichnet, daß der Formstempel (1) und die Sacköffnung (3) einen Kreisquerschnitt aufweisen und daß der kleinste Durchmesser des Tiefziehabschnittes (7) des Formstempels (1) 60 bis 75 Prozent - vorzugsweise 66 bis 70 Prozent - des Durchmessers der Sacköffnung (3) aufweist.

8.  Vorrichtung nach einem der Ansprüche 3 bis 8, dadurch gekennzeichnet, daß im Randbereich des Bodens (16) der Sacköffnung (3) eine umlaufende Sicke (17) vorhanden ist, die einen sich nach oben erweiternden Keilquerschnitt aufweist.

**Claims**

1.  Method for joining thin plates lying one on the other (4, 5), or sections of plates, where areas of the plates (4, 5) lying one on the other are jointly deep-drawn into a deep-drawing aperture (3) and the deep-drawn areas (13) are compressed in two opposite transverse directions and in the deep-drawing direction, their expansion being limited, whereby, in order to achieve positive interlocking of the plates (4, 5), the deep-drawn and compressed area (13) of a first plate (5) - seen in the deep-drawing direction - reaches under the second plate (4) lying under the first plate (5), this area (13) having dimensions which exceed the inside dimensions of the narrowest point of the deep-drawing hole (14) of the second plate (4), with plastic deformation of the plate material producing a join with an edge surface running in the deep-drawing direction, characterised by the fact that the volume of the deep-drawing aperture (3) is unchangeable in and transverse to the pressing direction, this inflexibly limiting the longitudinal and transverse expansion of the deep-drawn areas (13) during the compression process.

2. Method as per Claim 1, characterised by the fact that, following the compression process, the surface of the bottom of the areas (13) is beyond the plane of the plates formed by the underside of the two plates lying one on the other (4, 5).

3. Device for implementing the method as per Claim 1 or 2 for rivet-like joining of plates lying one on the other (4, 5), or sections of plates, with a die (2) located on a press device and having a deep-drawing aperture (3) and an upper die (1) driven transverse to the plates (4, 5) or plate sections to be joined in the direction of the die (2), where there is a radial clearance between the side walls (15) of the deep-drawing aperture (3) and the surfaces of the upper die, characterised by the fact that the deep-drawing aperture (3) in the die (2) is designed in a radial and axial direction as a blind aperture (3) (bottom die), the side walls (15) of which run parallel to the direction of movement of the upper die (1) and which, like the bottom of the blind aperture (3), are inflexible.

4. Device as per Claim 3, characterised by the fact that the upper die (21) is designed in the shape of a strip.

5. Device as per one of Claims 3 and 4, characterised by the fact that the blind aperture (23) is designed as a longitudinal slot.

6. Device as per one of Claims 3 to 5, characterised by the fact that the upper die (1) has a stepped profile in the deep-drawing direction, with a carrier part (6) of larger dimensions and a deep-drawing part (7) of smaller dimensions, this forming a shoulder (8) which rests on the plates (4, 5) after completion of the compression process.

7. Device as per one of Claims 3 to 6, characterized by the fact that the upper die (1) and the blind aperture (3) have a circular cross-section and the smallest diameter of the deep-drawing section (7) of the upper die (1) is between 60 and 75 percent - preferably 66 to 70 percent - of the diameter of the blind aperture (3).

8. Device as per one of Claims 3 to 7, characterized by the fact that there is a bead (17) running all round the edge of the bottom (16) of the blind aperture (3), this bead having a wedge-shaped cross-section widening towards the top.

**Revendications**

1. Procédé d'alliage de plaques minces superposées (4, 5) ou de segments de plaques (4, 5) qui sont emboutis ensemble dans une ouverture d'emboutissage (3) et les parties de surfaces embouties (13) avec délimination de l'extension dans deux directions opposées transversales et fluage latéral (13) d'une première plaque (5) dans le sens d'emboutissage. La deuxième plaque (4) se trouvant sous la première en direction d'emboutissage, la surface (13) a été dotée de déliminations, qui dépassent les dimensions internes du trou d'emboutissage (14) de la deuxième plaque (4). La déformation plastique du matériau de la plaque est engendrée par une surface de jointoiement issue d'une installation d'emboutissage. Cette surface de jointoiement est caractérisée par le volume de l'ouverture d'emboutissage (3) à l'intérieur et transversalement du sens de pression, de sorte qu'au cours du processus d'écrasement de la dilatation longitudinale et transversale inmanquable des surfaces (13).

2. Procédé selon dépôt de demande 1, se caractérisant par le fait qu'après l'écrasement la surface des fonds (13) en dehors du plan de plaque, qui est formé au bas des plaques superposées (4, 5).

3. Installation pour la réalisation du procédé selon dépôt de demande 1 ou 2 pour l'alliage par rivets de plaques superposées (4, 5) ou de secteurs de plaques superposés avec une matrice (2) dans laquelle est ménagée une ouverture d'emboutissage (3) et avec un poinçon de forme (1) actionné en travers des plaques à joindre (4, 5) ou des segments de plaques, étant entendu que les parois latérales (15) de l'ouverture d'emboutissage (3) présentent une distance radiale par rapport aux surfaces du chemisage du poinçon, se distingant par le fait que l'ouverture d'emboutissage (3) dans la matrice (2) prend l'allure d'un cul-de-sac (3) (matrice) en sens radial et axial, cul-de-sac, dont les parois latérales (15) évoluent dans le sens du mouvement du poinçon (1) et qui tout comme le fond du cul-de-sac (3) ne se déforme pas.

4. Procédé selon dépôt de demande 3, se caractérisant par le fait que le poinçon (21) a une configuration en listel.

5. Procédé selon dépôt de demande 3 ou 4, se caractérisant par le fait que l'ouverture du cul-de-sac (23) forme une rainure longitudinale.

6. Procédé selon un des dépôts de demande 3 à 5, se caractérisant par le fait que le poinçon (1) est doté d'une entaille étagée dans le sens de l'emboutissage, avec un élément de support (6) de plus grande dimension et une section d'emboutissage (7) de plus petite dimension, ce qui forme un épaulement (8) qui repose sur les plaques (4, 5) à la fin du procédé de contraction.

7. Procédé selon un des dépôts de demande 3 à 7, se caractérisant par le fait que le poinçon (1) et l'ouverture du cul-de-sac (3) présentent une section circulaire et que le plus petit diamètre de la section d'emboutissage (7) du poinçon (1) représente 60 à 75 pourcents - de préférence 66 à 70 pourcents - du diamètre du cul-de-sac (3).

8. Procédé selon un des dépôts de demande 3 à 8, se caractérisant par le fait que le bord marginal du fond (16) du cul-de-sac (3) présente une moulure (17) circulaire, qui présente une section en créneau qui s'élargit vers le haut.

FIG.1

FIG.2

FIG. 3

FIG.4

FIG.5

FIG. 6